Europäisches Patentamt

**European Patent Office**

Office européen des brevets

(11) Publication number: **0 129 416**
**A2**

(12) # EUROPEAN PATENT APPLICATION

(21) Application number: **84304032.0**

(22) Date of filing: **15.06.84**

(51) Int. Cl.³: **E 04 B 5/48**
**E 04 B 5/32**

(30) Priority: **17.06.83 GB 8316555**

(43) Date of publication of application:
**27.12.84 Bulletin 84/52**

(84) Designated Contracting States:
**AT BE CH DE FR IT LI LU NL SE**

(71) Applicant: **H.H. Robertson (U.K.) Limited**
**Cromwell Road Ellesmere Port**
**South Wirral Cheshire L65 4DS(GB)**

(72) Inventor: **Payne, Harold James William**
**The Old Rectory Handley**
**Chester, CH3 9DZ(GB)**

(74) Representative: **Dodd, David Michael et al,**
**ROYSTONS 531 Tower Building Water Street**
**Liverpool L3 1BA(GB)**

(54) **Flooring systems.**

(57) A flooring system has a corrugated base sheet (10) onto which concrete can be poured. An upwardly facing channel (12) has selectively associated cover means (30) and can be partitioned (14) to define tunnels (12A, 12B) for services such as electrical wiring. The cover means (30) need extend only between outlet units and/or junctions with transverse overlying feeder ducting (22). Junction box units (62) can afford access to the junctions at which service segregation can be maintained (26, 28).

FIG. 5

EP 0 129 416 A2

Title:    Flooring Systems

DESCRIPTION

The invention relates to flooring systems that include provision for tracking services such as electrical wiring via an essentially corrugated sheet component thereof such as used for concrete floors for which concrete is poured onto the corrugated sheet after installing same over beams.

Systems of this general type are known in which a corrugated steel sheet has secured to its underside a substantially planar sheet so as to form electrical cable housing "tunnels" in what would otherwise be downwardly open channels thereof.  Most often, the profile of the corrugated sheet is somewhat squared and elongated relative to substantially flat-topped and bottom channel formations (save for stiffening/anchoring ribs/grooves).  Such corrugated flooring sheets are, as mentioned above, most usually laid-over with concrete.   Access to the electrical wiring cables in the "tunnels" is by preformed holes in sides of the corrugations, sometimes in tops or crests thereof, but such access is less than easy especially in relation to fitting service/outlet and/or junction boxes whose positions are of course effectively preset..

It is an object of this invention to improve upon such flooring systems.

According to one aspect of this invention there is provided a flooring system for electrical wiring (or other services) via a corrugated base sheet, wherein at least one upwardly facing channel of such sheet is or are to form one or more wiring (or other services) "tunnels" when covered by cover means, usually sheet material. The cover means is readily affixed and cut to lengths as required to and between selectively emplaced outlet units and/or junctions to overlying feeder ducting for service-accommodating communication purposes, conveniently via selective gapping of said cover means and/or bottoms of the feeder ducting.

Savings compared with the aforementioned systems are substantial as service outlet and feeder duct requirements are readily satisfied and there is no need for preforming holes nor for attachment of bottom sheets/plates to the base sheet, especially as even the latter is normally a factory operation. Flexibility in terms of laying out electrical wiring is obviously much greater as is the ease of doing so.

Essentially, then, corrugated load-bearing sheet can be installed as required followed by overlying feeder ducting extending transversely of corrugations and gapped for desired cable take-off at the positions relative to upwardly open channels, the latter then being covered by sheets (conveniently simply secured by self-tapping screws or rivets) also gapped at the positions of said feeder ducting.

Junction boxes at coincidence of gappings in the feeder ducting and the cover sheeting are readily secured over the feeder ducting thereat and advantageously can provide access thereat for installing etc of the services. A suitable junction box includes a simple rectangular frame with an outward bottom flange, channel-shaped connections between sides of the feeder ducting and taking ends of the cover sheeting, and suitable packings to suit thicknesses of concrete floor.

For segregated service systems the upwardly facing channels are readily partitioned by fitting with one or more partitions lengthwise, say as sheeting with bent out edge portions for screw or rivet fixing. Similar considerations can be applied to partitioning of feeder ducting such as aforesaid and then also for segregated services, preferably to match channel segregation, for example via bottoms that have stepped end-formations that selectively extend from each side partially across gaps between partitions of the channel.

Outlet boxes can be at gaps in the cover sheeting and conveniently comprise upper and lower frames that are relatively height adjustable and preferably, at installation, further associated with cover trays subsequently removed (after concrete laid) for replacement by desired electrical access units.

One particular implementation of this invention will now be specifically described, by way of example, with reference to the accompanying drawings, in which:

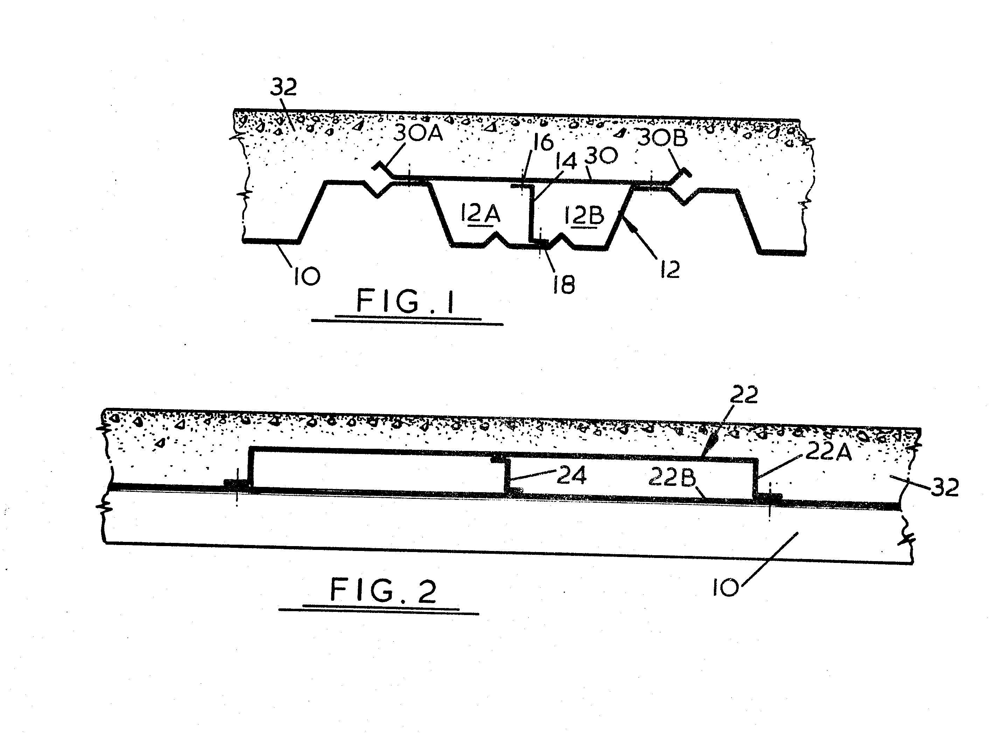

Figure 1 is a section through a preferred distribution duct in concrete floor;

Figure 2 is a section through a preferred feeder duct;

Figure 3 is an isometric view of an outlet box arrangement;

Figure 4 is a section through the outlet box arrangement of Figure 3;

Figure 5 is an isometric view of a junction box arrangement;

Figure 6 is a section through the junction box arrangement of Figure 5;  and

Figure 7 is an isometric view of a length of feeder duct.

In the drawings, a corrugated load-bearing metal sheet or plate 10 has upwardly open channels 12 actually shown longitudinally partitioned at 14 into segregated subchannels 12A and 12B.  Stiffening and anchoring grooves/ridges are shown in the sheet or plate 10.  Longitudinal partition 14 is of generally Z-section with upper and lower flanges 16 and 18 and is secured through the latter to the bottom of the channel 12, say by self-tapping screws or rivets at appropriate spacings.

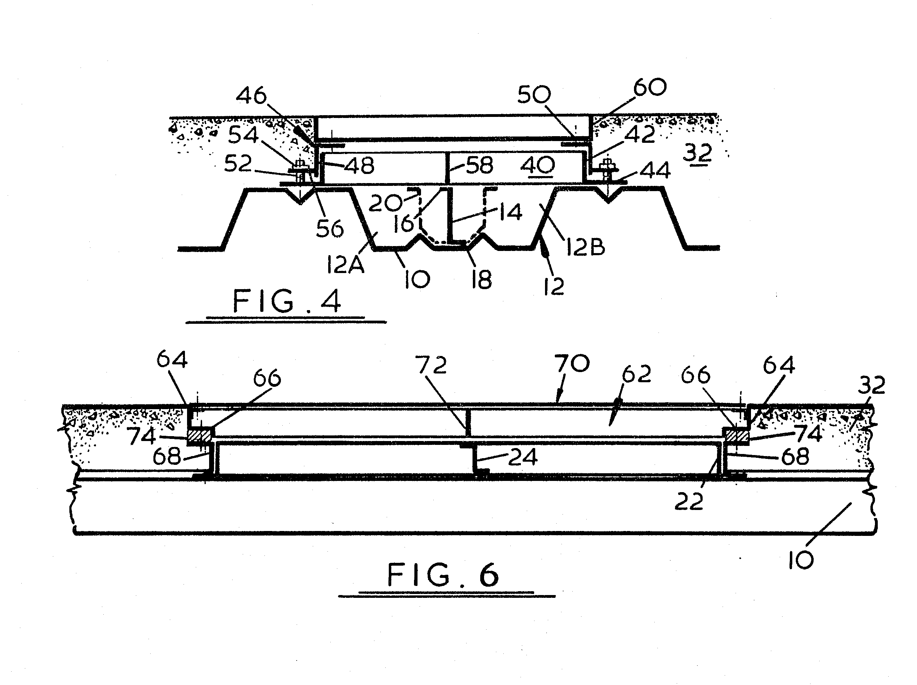

A three-way segregation could be attained by two partitions like 14 or by a channel section member shown dashed at 20 in Figure 4.

The sheet or plate 10 has overlying feeder ducting, see 22, extending generally transversely of its corrugations.  Longitudinal segregation partitioning is also shown at 24.  The ducting 22 is of a generally top hat upper (22a) and flat lower (22b) formation also suited to securement in position by screws or rivets to the sheet or plate 10.

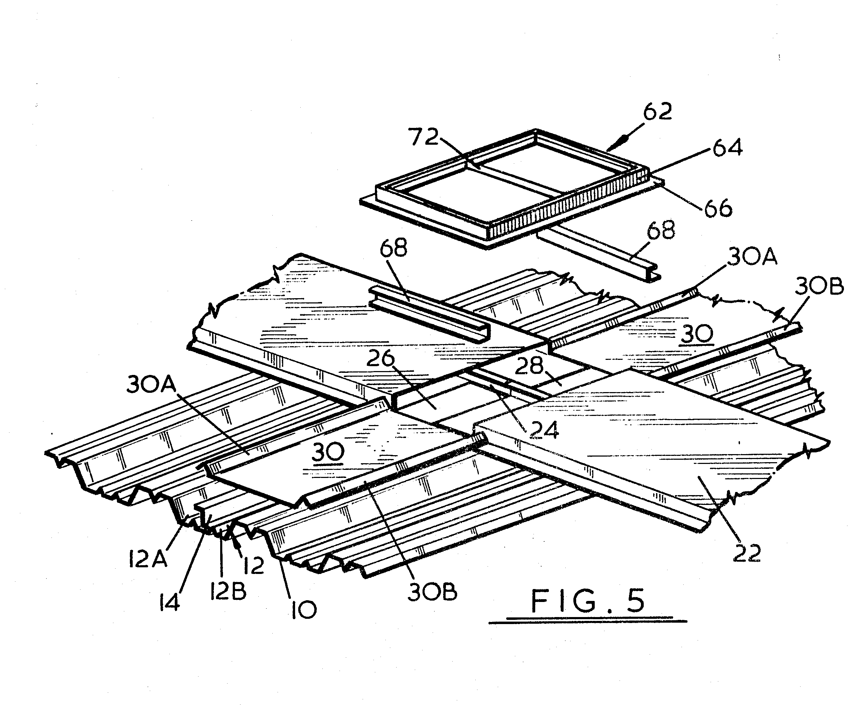

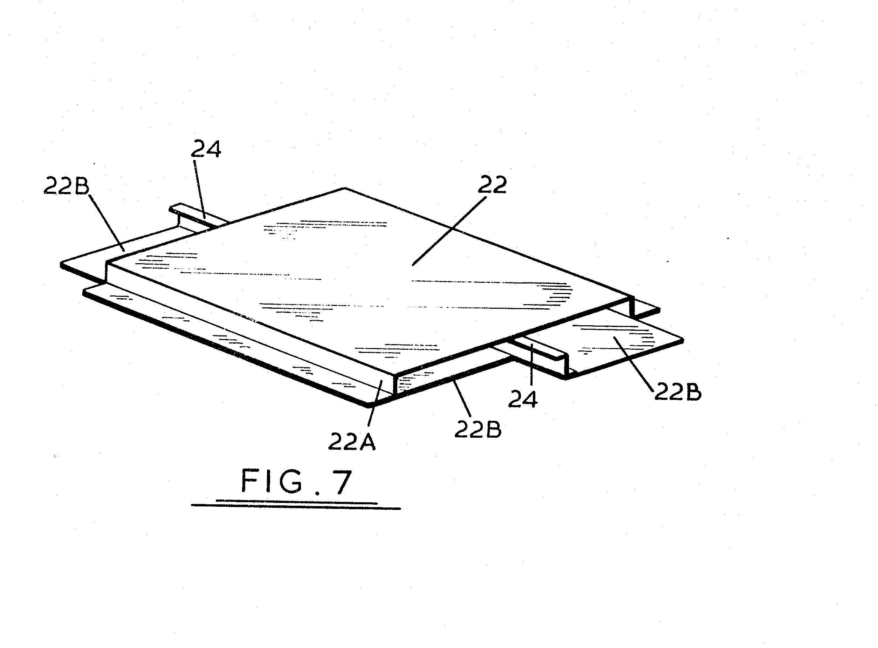

The feeder ducting 22 will be gapped (see Figure 5) wherever service branching is required into distribution ducts 12A, 12B and segregated access is assured by way of extensions of half the widths of bottom plates 22B half-way across the gap, see Figure 6 for a length of ducting so formed, and Figure 5 for gapped end relation at installation with access apertures 26, 28.

The distribution ducting 12A, 12B in upwardly open channels of the sheet or plate 10 is closed off by cover sheeting 30 with upwardly then downwardly bent edges 30A, 30B for stiffening and anchorage relative to concrete 32. The cover sheeting 30 is also readily secured to the sheet or plate so by screws or rivets and extends between gaps for outlet boxes and gaps coincident with gaps in the feeder ducting 22 for junction boxes.

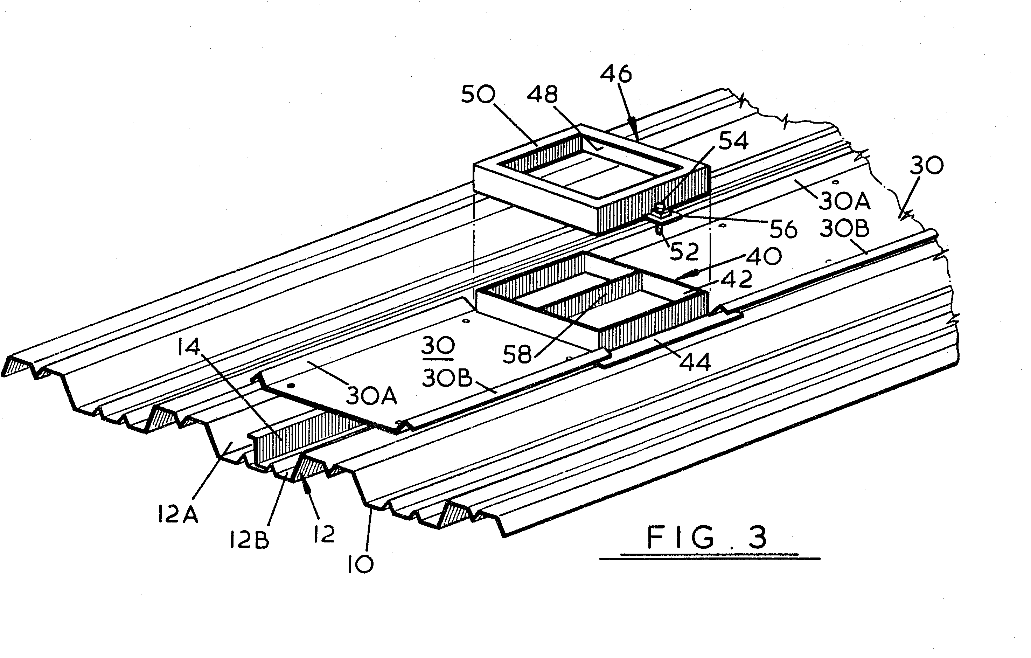

A preferred outlet box, see Figures 3 and 4, comprises a lower frame element 40 with upstanding peripheral side walls 42 in a rectangle and bottom exterior flanging 44 for basic securement purposes, and an upper frame element 46 with peripheral side walls 48 and an upper interior flange 50 to overfit the lower element 40. The upper element 46 is height-adjustable relative to the lower element 40, say via a screw and fixed nut arrangement 52, 54 in tabs 56.

Rectangular such outlet boxes are very convenient and a partition 58 is shown in the lower element 40 to match segregation of the distribution ducting 12A, 12B.

At installation, i.e. prior to concrete pouring, the outlet boxes are covered by a tray 60 that is subsequently removable for affixing a suitable service accessory or access unit.

A preferred junction box, see Figures 5 and 6, comprises a frame element 62 having peripheral side walls 64 and a bottom extension (Figure 5) or interior (Figure 6) flange 66 for securement relative to the feeder ducting 22 and also to channel shaped elements 68 that will accept the ends of cover sheeting 30, preferably snugly if not in light compression. It will be noted that one side of the channel of element 60 is longer than the other and same is lowermost for ease for fixing to the sheet or plate 10. A cover plate is also indicated at 70 in Figure 6. Segregation partitioning 72 will, of course, match the feeder ducting. Height adjustment according to desired concrete thickness is available via packings 74, see Figure 6, which are preferably of resilient deformable material to allow fine adjustment according to degree of compression.

It will be appreciated that segregated communication at junctions could be by selective stepping of end formations of the cover sheeting 30 rather than bottoms of the feeder ducting, though without the above-preferred channel shaped elements 68 accepting ends of such cover sheeting. Moreover, whilst we have referred to the ease of installation using rivets or self-tapping screws, we do not rule out the possibility of using clips or even clip-in arrangements especially where same will be consolidated by poured concrete.

## CLAIMS

1. A flooring system comprising a corrugated base sheet onto which concrete can be poured and of which at least one upwardly facing channel has selectively associated cover means thereover to define at least one tunnel for services such as electrical wiring.

2. A flooring system according to claim 1, comprising feeder ducting extending generally transversely of the corrugations of the base sheet in overlying relation and with service-accommodating communication with said channel at junction therewith via selective gapping of said cover means and the bottom of said ducting.

3. A flooring system comprising a corrugated base sheet onto which concrete can be poured and of which at least one upwardly facing channel has selectively associated cover means thereover to define at least one tunnel for services such as electrical wiring, and overlying feeder ducting extending generally transversely of the corrugations of the base sheet with service-accommodating communication with said channel at junction therewith.

4. A flooring system according to claim 3, wherein said communication is afforded at selective gapping of said cover means and the bottom of said ducting.

5. A flooring system according to claim 2 or claim 4, comprising, at the or each said junction, a height-adjustable junction box affording access to services.

6. A flooring system according to claim 5, wherein the junction box comprises a rectangular frame fitting, with packing for height setting, over spaced tops of aligned lengths of said ducting and over channel-section connections of sides of those ducting lengths that also take ends of lengths of said cover means, and a cover for said frame.

7. A flooring system according to any preceding claim, comprising longitudinally extending partitioning means for said channel to afford two or more tunnels for use in segregating services.

8. A flooring system according to any one of claims 2 to 6, comprising longitudinally extending partitioning means for said feeder ducting to afford two or more separated ducts for use in segregating services.

9. A flooring system according to claim 7 and 8, comprising means at said junction for limiting said communication so that each tunnel has service-accommodating access only to a different one of said ducts.

10. A flooring system according to claim 9, wherein the last-mentioned means comprises spaced ends of aligned lengths of cover sheet of said cover means and, between them protruding stepped end formations of bottoms of aligned lengths of said ducting.

11. A flooring system according to any preceding claim, comprising at least one height-adjustable outlet box straddling said channel between spaced lengths of said cover means.

12. A flooring system according to claim 11 with claim 7, wherein the outlet box is partitioned to match said partitioning of the channel.

13. A flooring system according to claim 11 or claim 12, wherein said outlet box comprises a first rectangular frame flanged to fit to crests of the base sheet flanking said channel and a second frame to fit over the first frame to give a variable overall height

14. A flooring system according to claim 12 or claim 13, comprising, for said outlet box, a cover tray for later replacement by service access units.

FIG. 1

FIG. 2

FIG. 3

FIG. 4

FIG. 6

0129416

FIG. 5

0129416

FIG. 7

22B

24

22

22A

22B

24

22B